# DEMANDE DE BREVET EUROPEEN

(11) **EP 0 926 804 A1**
(43) Date de publication de la demande: **30.06.1999**
(21) Numéro de dépôt: 98440289.1
(22) Date de dépôt: 10.12.1998
(51) Int. Cl.: H02K 7/116

(54) **Actionneur électromécanique à courant continu**

(30) Priorité: 19.12.1997 FR 9716439
(71) Demandeur: EATON S.A.M., MC-98000 Monaco (MC)
(72) Inventeur: Goubely, Aimé, 06340 La Trinité (FR); Herbelleau, Marc, 06500 Menton (FR)
(74) Mandataire: Littolff, Denis

(57) **Abrégé**

Actionneur électromécanique à courant continu comportant essentiellement un boîtier (18) dans lequel est logé un moteur à courant continu, un réducteur à train d'engrenages monté sur l'arbre du moteur, et un potentiomètre de recopie (1) destiné à contrôler la position angulaire des éléments rotatifs, ledit potentiomètre comportant une partie fixée au boîtier (18) de l'actionneur,
caractérisé en ce que le potentiomètre de recopie (1) comporte un arbre (4) disposé coaxialement au pignon de sortie (6) du train d'engrenage, libre en rotation par rapport à la partie (2) fixée au boîtier de l'actionneur, l'une des extrémités (10) dudit arbre (4) étant logée dans un palier (15) solidaire du boîtier (18), l'autre extrémité (9) étant solidaire en rotation dudit pignon de sortie (6) du train d'engrenages du réducteur.

## Description

La présente invention s'applique aux actionneurs électromécaniques à courant continu, et plus particulièrement aux potentiomètres de recopie dont ils sont équipés. Encore plus précisément, l'invention concerne les liaisons mécaniques entre lesdits potentiomètres et les composants des actionneurs avec lesquels ils coopèrent.

Un actionneur à moteur à courant continu est classiquement composé d'un boîtier, d'un moteur, d'un réducteur à train d'engrenages et d'un potentiomètre de recopie permettant de contrôler la position angulaire des éléments rotatifs en mouvement.

Le potentiomètre est en général constitué d'un support comprenant notamment un circuit imprimé, fixé au boîtier de l'actionneur, coopérant avec des balais solidaires d'un organe rotatif. Les extrémités des balais frottent sur ledit support, par exemple sur des pistes du circuit imprimé, reflétant le déplacement angulaire des organes rotatifs puisqu'ils se déplacent en même temps que ceux-ci relativement au support fixe que constituent le support et la plaque du circuit imprimé. De préférence, ces balais sont fixés directement sur le pignon de sortie du train d'engrenages réducteur.

Pour que la mesure du déplacement angulaire soit la plus précise possible, le potentiomètre de recopie est en général positionné concentriquement à l'axe de rotation du mouvement en sortie, c'est à dire en fait coaxialement audit pignon de sortie.

Actuellement, les actionneurs connus utilisant un potentiomètre intégré dans le boîtier sont conçus de telle sorte que, pour que la coaxialité avec le pignon de sortie soit réalisée, le potentiomètre sert de palier audit pignon, et supporte par conséquent les charges radiales dues à l'engrènement. Ces contraintes ont cependant pour effet d'user le palier du potentiomètre, et de dégrader progressivement la précision de la mesure.

L'appareil devient de moins en moins fiable avec le temps, ce qui constitue bien entendu un inconvénient rédhibitoire dans nombre d'utilisations, en particulier dans le domaine de l'automobile où ils sont fréquemment employés.

L'objectif de la présente invention est de supprimer cet inconvénient, et de proposer une solution permettant un montage du potentiomètre coaxialement au pignon de sortie sans qu'il subisse les charges radiales dues à l'engrènement dans son propre palier. Au contraire, dans la solution préconisée, le potentiomètre transmet ces contraintes dans un palier prévu à cet effet dans le boîtier de l'actionneur, et préserve ainsi ses qualités de précision.

Le montage du potentiomètre selon l'invention permet en outre d'éviter un inconvénient supplémentaire, résultant de la fixation des balais directement sur le pignon de sortie, puisqu'alors lesdits potentiomètres sont formés à partir de parties distinctes de l'appareil, ce qui entraîne une imprécision dimensionnelle susceptible de se répercuter sur la précision globale de l'actionneur.

L'actionneur électromécanique à courant continu de l'invention comporte essentiellement un boîtier dans lequel est logé un moteur à courant continu, un réducteur à train d'engrenages monté sur l'arbre du moteur, et un potentiomètre de recopie destiné à contrôler la position angulaire des éléments rotatifs, ledit potentiomètre comportant une partie fixée au boîtier de l'actionneur, laquelle comprend notamment le circuit imprimé ou plus généralement le circuit électrique.

Pour répondre aux objectifs précités, il se caractérise à titre principal en ce que le potentiomètre de recopie comporte un arbre disposé coaxialement au pignon de sortie du train d'engrenage, libre en rotation par rapport à la partie fixée au boîtier de l'actionneur, l'une des extrémités dudit arbre étant logée dans un palier solidaire du boîtier, l'autre extrémité étant solidaire en rotation dudit pignon de sortie du train d'engrenages du réducteur.

La configuration du potentiomètre est donc schématiquement la suivante : l'arbre coaxial au pignon de sortie du réducteur sert de pivot à une partie d'allure radiale fixée au boîtier de l'actionneur. En d'autres termes, ledit arbre tourne dans un logement ou palier circulaire de cette partie d'allure radiale.

L'arbre du potentiomètre et ladite partie d'allure radiale fixée au boîtier sont donc indépendants d'un point de vue rotatif, et les charges radiales subies par le pignon de sortie n'affectent nullement leur coopération mutuelle.

Selon une variante possible, l'arbre du potentiomètre de recopie est d'une seule pièce avec le pignon de sortie, dont il constitue en quelque sorte une excroissance axiale.

En d'autres termes, c'est l'arbre du potentiomètre de recopie qui fournit, dans sa partie centrale, une couronne dentée constituant le pignon de sortie de l'actionneur.

Dans les deux cas, l'indépendance rotative est assurée, et la liaison en translation est réalisée selon les contraintes axiales à gérer.

Dans le cas où le pignon n'est pas d'une seule pièce avec l'arbre du potentiomètre de recopie, l'extrémité dudit arbre destinée à venir en prise avec ledit pignon comporte un embout dont le volume, s'insérant dans un cavité de volume correspondant dudit pignon de sortie, empêche tout mouvement de rotation relative entre l'arbre et le pignon.

Plus précisément, ledit embout présente une forme partiellement cylindrique, au moins un méplat latéral assurant son blocage en rotation dans ladite cavité de volume correspondant pratiquée dans le pignon de sortie.

Cette forme ne constitue bien entendu qu'un exemple de liaison assurant une solidarité à la rotation, d'autres configurations pouvant être utilisées selon notamment les contraintes de conception des composants participant à la liaison, où selon des choix résultant des procédés de fabrication choisis pour la réalisation desdits composants.

L'extrémité de l'arbre du potentiomètre de recopie coopérant avec le palier solidaire du boîtier forme un tourillon de guidage dans ledit palier, dont le bout destiné à venir au contact axial du fond dudit palier est hémisphérique.

En résumé, cet arbre comporte une partie centrale libre en rotation par rapport à la partie fixe du potentiomètre, formant pivot de celle-ci, et deux tronçons d'extrémité remplissant diverses fonctions expliquées en détail ci-après.

Parmi celles-ci, le maintien axial de la partie fixe du potentiomètre est réalisée par une collerette annulaire formant butée axiale contre laquelle repose la partie fixe d'allure radiale dudit potentiomètre, ladite collerette étant placée du côté opposé au pignon de sortie relativement à cette partie d'allure radiale.

Contrairement à certains dispositifs de l'art antérieur, le potentiomètre de l'invention n'est pas "éparpillé" entre différentes pièces de l'actionneur, puisque l'arbre comporte au moins un balai destiné à coopérer avec la partie fixe dudit potentiomètre.

Selon une configuration possible, le ou les balais reposent contre un épaulement dudit arbre faisant face à ladite partie d'allure radiale du potentiomètre.

Il n'y a alors nul besoin de procéder à des adaptations dimensionnelles entre des pièces distinctes telles que le pignon de sortie, l'élément fixe de l'actionneur, etc... et cela augmente la précision de l'ensemble.

Le potentiomètre de l'invention et le boîtier de l'actionneur ont en outre été conçus pour permettre un autopositionnement du premier cité dans le second.

A cet effet, le boîtier comporte des moyens de fixation de la partie fixe du potentiomètre réalisant un blocage en rotation de celle-ci mais autorisant un ajustement radial.

Ainsi, la partie d'allure radiale du potentiomètre de recopie, fixée au boîtier de l'actionneur, comporte des plots latéraux de positionnement destinés à s'insérer entre deux surfaces planes d'allure parallèle et disposées en vis-à-vis portées par deux excroissance solidaires du boîtier.

De préférence, ces plots latéraux sont de forme hémicylindrique, de manière à constituer deux appuis linéaires permettant un autopositionnement angulaire du potentiomètre lors de l'installation.

Ces caractéristiques, ainsi que d'autres qui seront décrites plus en détail dans la suite, permettent de s'affranchir des inconvénients mentionnés auparavant.

L'aspect essentiel de l'invention réside dans l'existence d'un pivot pour la partie fixe du potentiomètre, lequel assure la réalisation de liaisons mécaniques adéquates d'une part avec le pignon de sortie et d'autre part avec le palier du boîtier, de sorte que la fonction principale du potentiomètre, reproduire le déplacement angulaire relatif pignon/boîtier, n'est pas altéré par les contraintes mécaniques inhérentes au fonctionnement de l'actionneur.

Ceci est montré de façon plus concrète à l'aide d'exemples illustrés par les figures disposées en annexe, pour lesquelles :
- La figure 1 représente une coupe axiale partielle d'un actionneur de l'invention.
- La figure 1a est une coupe transversale partielle selon C-C de la figure 1.
- La figure 2 montre une variante de la configuration de la figure précédente, dans laquelle l'arbre du potentiomètre est d'une seule pièce avec le pignon de sortie du train d'engrenages réducteur.
- La figure 2a est une coupe transversale partielle, au même niveau C-C, de la configuration de la figure précédente, et
- La figure 3 est une vue partielle, de dessus, du potentiomètre de l'invention, donnant simultanément le plan de coupe A-A des figures 1 et 2.

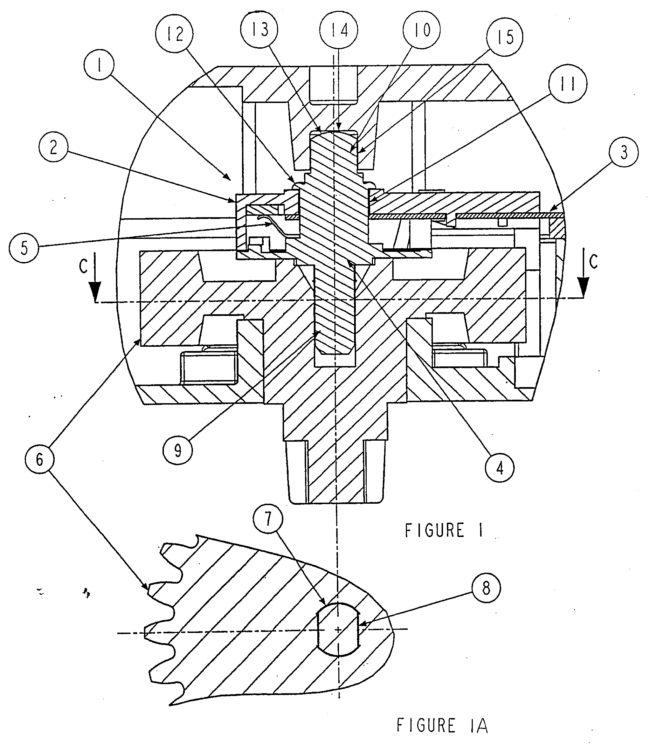

En référence à la figure 1, la potentiomètre (1) comporte une partie fixée au boîtier (non représenté sur cette figure), qui est une partie d'allure radiale (2) relativement à l'arbre (4) matérialisant l'axe de rotation. Cet axe est celui autour duquel tourne au moins le pignon (6) de sortie du train d'engrenages à réducteur, correspondant d'une manière générale à l'axe de rotation en sortie de l'actionneur.

La partie fixe d'allure radiale (2) supporte notamment les pistes électriques, par exemple d'un circuit imprimé, ainsi que les broches de connexions (3) permettant son utilisation dans un système plus vaste, et l'exploitation des signaux du potentiomètre.

L'arbre central (4) possède les fonctions principales suivantes :
- supporter et entraîner en rotation les balais de contact (5), fixés au niveau d'un épaulement disposé en vis-à-vis de la partie fixe (2) du potentiomètre (1);
- permettre une liaison en rotation coaxiale au pignon (6), sans jeu qui pourrait nuire à la précision de la mesure du déplacement angulaire relatif pignon (6) / partie fixe (2) du potentiomètre (1), liaison réalisée au moyen d'un embout (9) formant l'une des extrémités de l'arbre (4) ;
- permettre une liaison rotative dans un palier (15), à l'aide d'un tourillon (10) constituant l'autre extrémité de l'arbre (4) ; et
- constituer un pivot (11) pour la partie fixe (2).

Un certain nombre de fonctions secondaires et de conséquences en découlent. Ainsi, la liaison entre l'embout (9) et le pignon (6) est chargée d'assurer la transmission des contraintes mécaniques entre ce dernier et l'arbre (4). A cet effet, une forme particulière, apparaissant en section en figure 1a, a été donnée audit embout (9) et au volume creux du pignon (6) qui le loge.

Plus précisément, cet embout comporte deux pans arrondis (7) séparés par des méplats (8) latéraux bloquant la rotation relative de l'arbre (4) et du pignon (6). L'assemblage entre ces deux éléments doit être tel que la résistance mécanique de l'ensemble puisse donner l'impression d'une intégration de l'arbre (4) au pignon (6).

Le pivot (11) de la partie d'allure radiale (2) comporte une collerette (12) maintenant axialement ladite partie (2) sur l'arbre (4). L'aspect axial du positionnement de l'arbre (4) par rapport au boîtier est notamment pris en charge par la liaison mécanique du tourillon (10) dans le palier (15).

L'arbre (4), libre en rotation dans ledit palier (15), comporte à l'extrémité du tourillon (10) un bout hémisphérique (13) permettant son appui axial sur le fond (14) dudit palier (15). Ce bout hémisphérique (13) permet un appui ponctuel qui supprime le jeu axial, en combinaison avec le contact entre le fond du logement et l'extrémité de l'embout (9) dans le pignon (6). Il permet également de diminuer les frottements, et donc de permettre au palier d'assurer sa fonction dans les meilleures conditions.

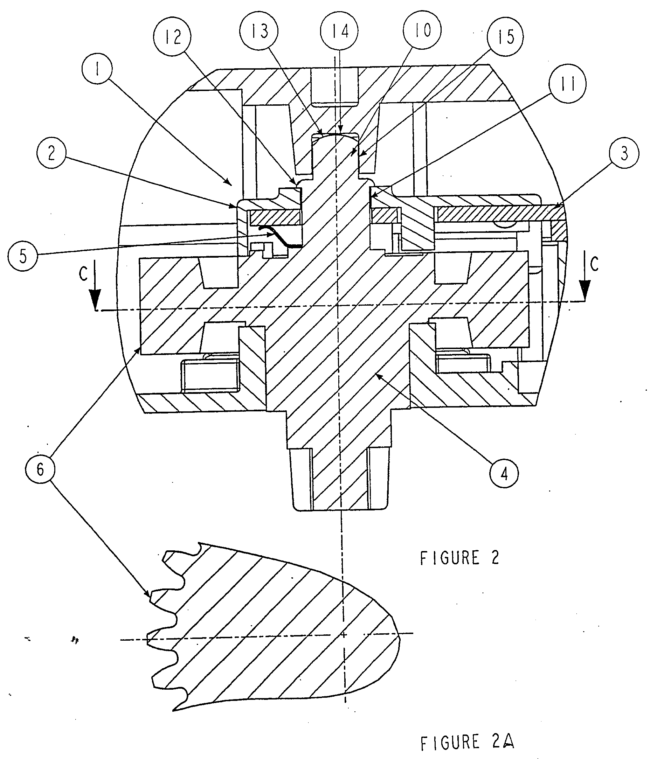

La variante des figures 2 et 2a supprime la liaison entre l'embout (9) et le pignon de sortie (6). L'arbre (4) est donc d'une seule pièce avec ce pignon (6). Ceci illustre bien les propriétés mécaniques que doit assurer la liaison précitée, qui doit en fait effectuer un double blocage en rotation et en translation.

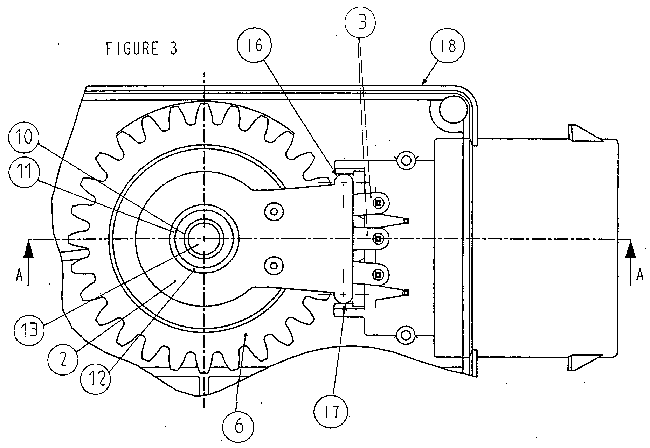

La figure 3 montre la configuration de la pièce (2) d'allure radiale, fixée au boîtier (18) via des plots hémicylindriques (16) coopérant avec des méplats (17) en vis-à-vis. Ces derniers sont placés aux extrémités de deux excroissances solidaires du boîtier (18) de l'actionneur.

Cet assemblage particulier a pour avantage de permettre un autopositionnement de la partie fixe (2) par rapport au boîtier (18), grâce aux appuis linéaires procurés par les plots hémisphériques (16) s'appuyant sur les surfaces des méplats (17), ledit positionnement se faisant par pivotement autour de l'arbre (4), sans que le pivot (11) ne subisse de contrainte.

Cette figure montre en outre les broches de connexion (3) destinées à raccorder l'actionneur de l'invention à un circuit de commande, auquel le potentiomètre est relié et auquel il communique la position angulaire relative entre le pignon (6) de sortie du train d'engrenages et le boîtier fixe (18).

Le dispositif de l'invention est utilisé dans tout système employant des actionneurs rotatifs contrôlés en position par un potentiomètre de recopie. C'est notamment le cas pour des systèmes d'aération, de climatisation, de chauffage, etc... notamment dans les automobiles.

Le dispositif divulgué ci-dessus n'est cependant qu'un exemple illustratif de l'invention, qui ne peut être considéré comme exhaustif de celle-ci. L'invention englobe au contraire les variantes entrant dans le cadre du jeu de revendications annexées.

## Revendications

1. Actionneur électromécanique à courant continu comportant essentiellement un boîtier (18) dans lequel est logé un moteur à courant continu, un réducteur à train d'engrenages monté sur l'arbre du moteur, et un potentiomètre de recopie (1) destiné à contrôler la position angulaire des éléments rotatifs, ledit potentiomètre comportant une partie fixée au boîtier (18) de l'actionneur,
caractérisé en ce que le potentiomètre de recopie (1) inclut un arbre (4) disposé coaxialement au pignon de sortie (6) du train d'engrenage, libre en rotation par rapport à la partie (2) fixée au boîtier de l'actionneur, l'une des extrémités (10) dudit arbre (4) étant logée dans un palier (15) solidaire du boîtier (18), l'autre extrémité (9) étant solidaire en rotation dudit pignon de sortie (6) du train d'engrenages du réducteur.

2. Actionneur électromécanique selon la revendication 1, caractérisé en ce que l'arbre (4) du potentiomètre de recopie (1) est d'une seule pièce avec le pignon de sortie (6), dont il constitue une excroissance axiale.

3. Actionneur électromécanique selon la revendication 1, caractérisé en ce que l'extrémité (9) de l'arbre (4) du potentiomètre de recopie (1) solidaire du pignon de sortie (6) du train d'engrenages réducteur comporte un embout (9) dont le volume, s'insérant dans une cavité de volume correspondant dudit pignon de sortie (6), empêche tout mouvement de rotation relative entre l'arbre (4) et le pignon (6).

4. Actionneur électromécanique selon la revendication précédente, caractérisé en ce que ledit embout (9) présente une forme partiellement cylindrique, au moins un méplat latéral (8) assurant son blocage en rotation dans ladite cavité du pignon de sortie (6).

5. Actionneur électromécanique selon l'une quelconque des revendications précédentes, caractérisé en ce que l'extrémité de l'arbre (4) du potentiomètre de recopie (1) coopérant avec le palier (15) solidaire du boîtier (18), forme un tourillon de guidage (10) dans ledit palier, dont le bout (13) destiné à venir au contact axial du fond (14) dudit palier (15) est hémisphérique.

6. Actionneur électromécanique selon l'une quelconque des revendications précédentes, caractérisé en ce que l'arbre (4) du potentiomètre de recopie (1) comporte une collerette annulaire (12) formant butée axiale contre laquelle repose la partie fixe (2) dudit potentiomètre (1), ladite collerette (12) étant placée du côté opposé au pignon de sortie (6) relativement à cette partie d'allure radiale (2).

7. Actionneur électromécanique selon l'une quelconque des revendications précédentes, caractérisé en ce que l'arbre (4) du potentiomètre (1) comporte au moins un balai (5) destiné à coopérer avec la partie fixe (2) dudit potentiomètre (1).

8. Actionneur électromécanique selon la revendication précédente, caractérisé en ce que le ou les balais (5) reposent contre un épaulement dudit arbre (4) faisant face à la partie fixe (2) du potentiomètre (1).

9. Actionneur électromécanique selon l'une quelconque des revendications précédentes, caractérisé en ce que le boîtier (18) comporte des moyens de fixation (16, 17) de la partie fixe (2) du potentiomètre (1) réalisant un blocage en rotation de celle-ci mais autorisant un ajustement radial.

10. Actionneur électromécanique selon la revendication précédente, caractérisé en ce que la partie d'allure radiale (2) du potentiomètre de recopie (1), fixée au boîtier (18) de l'actionneur, comporte des plots latéraux (16) de positionnement destinés à s'insérer entre deux surfaces planes (17) d'allure parallèle et disposées en vis-à-vis portées par deux excroissances solidaires dudit boîtier (18).

11. Actionneur électromécanique selon la revendication précédente, caractérisé en ce que les plots latéraux (16) sont de forme hémicylindrique, de manière à constituer deux appuis linéaires permettant un autopositionnement angulaire du potentiomètre de recopie (1).
